# EUROPEAN PATENT APPLICATION

(11) **EP 4 503 723 A1**
(43) Date of publication of application: **05.02.2025**
(21) Application number: 23799600.4
(22) Date of filing: 19.04.2023
(51) Int. Cl.: H04W 28/02, H04W 60/02, H04W 60/06

(54) **LOCAL SERVICE MANAGEMENT METHOD**

(30) Priority: 02.05.2022 US 202263337183 P; 02.08.2022 US 202263394301 P
(71) Applicant: LG Electronics Inc., Yeongdeungpo-gu Seoul 07336 (KR)
(72) Inventor: YOUN, Myungjune, Seoul 06772 (KR); KIM, Laeyoung, Seoul 06772 (KR)
(74) Representative: Plasseraud IP
(86) International application number: PCT/KR2023/005291
(87) International publication number: WO 2023/214717

(57) **Abstract**

One disclosure of the present description provides a method by which an AMF performs communication. The method comprises steps in which a hosting network hosting a local service and including an AMF: receives a first registration request from a first UE; transmits a first registration approval to the first UE; transmits a first registration cancellation request to the first UE on the basis that the local service has ended, the first registration cancellation request including information informing that the local service has ended; and receives a first registration cancellation approval from the first UE.

## Description

### TECHNICAL FIELD

The present specification relates to mobile communications.

### BACKGROUND ART

3rd generation partnership project (3GPP) long-term evolution (LTE) is a technology for enabling high-speed packet communications. Many schemes have been proposed for the LTE objective including those that aim to reduce user and provider costs, improve service quality, and expand and improve coverage and system capacity. The 3GPP LTE requires reduced cost per bit, increased service availability, flexible use of a frequency band, a simple structure, an open interface, and adequate power consumption of a terminal as an upper-level requirement.

Work has started in international telecommunication union (ITU) and 3GPP to develop requirements and specifications for new radio (NR) systems. 3GPP has to identify and develop the technology components needed for successfully standardizing the new RAT timely satisfying both the urgent market needs, and the more long-term requirements set forth by the ITU radio communication sector (ITU-R) international mobile telecommunications (IMT)-2020 process. Further, the NR should be able to use any spectrum band ranging at least up to 100 GHz that may be made available for wireless communications even in a more distant future.

The NR targets a single technical framework addressing all usage scenarios, requirements and deployment scenarios including enhanced mobile broadband (eMBB), massive machine-type-communications (mMTC), ultra-reliable and low latency communications (URLLC), etc. The NR shall be inherently forward compatible.

After the local service is shut down, we need suggestions for the behavior of the network that hosted the local service.

### DESCLOSURE

### TECHNICAL SOLUTION

After the local service is terminated, the hosting network unregisters the device and notifies the device that the local service has been terminated. Also, after the local service is terminated, the hosting network deregisters multiple devices in sequence.

### BRIEF DESCRIPTION OF THE DRAWINGS

FIG. 1 shows an example of a communication system to which implementations of the present disclosure is applied.
FIG. 2 shows an example of wireless devices to which implementations of the present disclosure is applied.
FIG. 3 shows an example of UE to which implementations of the present disclosure is applied.
FIG. 4 illustrates an example 5G system structure to which an implementation of the present specification may be applied.
FIG. 5 illustrates a procedure according to an embodiment of the present specification.
FIG. 6 shows the procedure of the AMF according to the disclosure of the present specification.
FIG. 7 shows the procedure of the first UE according to the disclosure of the present specification.

### MODE FOR INVENTION

The following techniques, apparatuses, and systems may be applied to a variety of wireless multiple access systems. Examples of the multiple access systems include a code division multiple access (CDMA) system, a frequency division multiple access (FDMA) system, a time division multiple access (TDMA) system, an orthogonal frequency division multiple access (OFDMA) system, a single carrier frequency division multiple access (SC-FDMA) system, and a multicarrier frequency division multiple access (MC-FDMA) system. CDMA may be embodied through radio technology such as universal terrestrial radio access (UTRA) or CDMA2000. TDMA may be embodied through radio technology such as global system for mobile communications (GSM), general packet radio service (GPRS), or enhanced data rates for GSM evolution (EDGE). OFDMA may be embodied through radio technology such as institute of electrical and electronics engineers (IEEE) 802.11 (Wi-Fi), IEEE 802.16 (WiMAX), IEEE 802.20, or evolved UTRA (E-UTRA). UTRA is a part of a universal mobile telecommunications system (UMTS). 3rd generation partnership project (3GPP) long term evolution (LTE) is a part of evolved UMTS (E-UMTS) using E-UTRA. 3GPP LTE employs OFDMA in DL and SC-FDMA in UL. Evolution of 3GPP LTE includes LTE-A (advanced), LTE-A Pro, and/or 5GNR (new radio).

For convenience of description, implementations of the present disclosure are mainly described in regards to a 3GPP based wireless communication system. However, the technical features of the present disclosure are not limited thereto. For example, although the following detailed description is given based on a mobile communication system corresponding to a 3GPP based wireless communication system, aspects of the present disclosure that are not limited to 3GPP based wireless communication system are applicable to other mobile communication systems.

For terms and technologies which are not specifically described among the terms of and technologies employed in the present disclosure, the wireless communication standard documents published before the present disclosure may be referenced.

In the present disclosure, "A or B" may mean "only A", "only B", or "both A and B". In other words, "A or B" in the present disclosure may be interpreted as "A and/or B". For example, "A, B or C" in the present disclosure may mean "only A", "only B", "only C", or "any combination of A, B and C".

In the present disclosure, slash (/) or comma (,) may mean "and/or". For example, "A/B" may mean "A and/or B". Accordingly, "A/B" may mean "only A", "only B", or "both A and B". For example, "A, B, C" may mean "A, B or C".

In the present disclosure, "at least one of A and B" may mean "only A", "only B" or "both A and B". In addition, the expression "at least one of A or B" or "at least one of A and/or B" in the present disclosure may be interpreted as same as "at least one of A and B".

In addition, in the present disclosure, "at least one of A, B and C" may mean "only A", "only B", "only C", or "any combination of A, B and C". In addition, "at least one of A, B or C" or "at least one of A, B and/or C" may mean "at least one of A, B and C".

Also, parentheses used in the present disclosure may mean "for example". In detail, when it is shown as "control information (PDCCH)", "PDCCH" may be proposed as an example of "control information". In other words, "control information" in the present disclosure is not limited to "PDCCH", and "PDCCH" may be proposed as an example of "control information". In addition, even when shown as "control information (i.e., PDCCH)", "PDCCH" may be proposed as an example of "control information".

Technical features that are separately described in one drawing in the present disclosure may be implemented separately or simultaneously.

Although not limited thereto, various descriptions, functions, procedures, suggestions, methods and/or operational flowcharts of the present disclosure disclosed herein can be applied to various fields requiring wireless communication and/or connection (e.g., 5G) between devices.

Hereinafter, the present disclosure will be described in more detail with reference to drawings. The same reference numerals in the following drawings and/or descriptions may refer to the same and/or corresponding hardware blocks, software blocks, and/or functional blocks unless otherwise indicated.

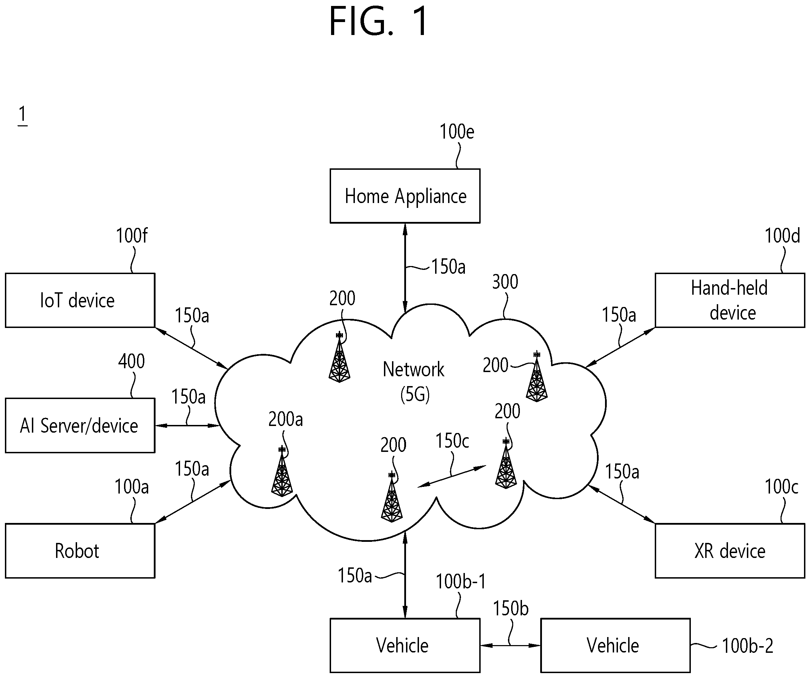

**FIG. 1** **shows an example of a communication system to which implementations of the present disclosure is applied.**

The 5G usage scenarios shown in FIG. 1 are only exemplary, and the technical features of the present disclosure can be applied to other 5G usage scenarios which are not shown in FIG. 1.

Three main requirement categories for 5G include (1) a category of enhanced mobile broadband (eMBB), (2) a category of massive machine type communication (mMTC), and (3) a category of ultra-reliable and low latency communications (URLLC).

Referring to FIG. 1, the communication system 1 includes wireless devices 100a to 100f, base stations (BSs) 200, and a network 300. Although FIG. 1 illustrates a 5G network as an example of the network of the communication system 1, the implementations of the present disclosure are not limited to the 5G system, and can be applied to the future communication system beyond the 5G system.

The BSs 200 and the network 300 may be implemented as wireless devices and a specific wireless device may operate as a BS/network node with respect to other wireless devices.

The wireless devices 100a to 100f represent devices performing communication using radio access technology (RAT) (e.g., 5G new RAT (NR)) or LTE) and may be referred to as communication/radio/SG devices. The wireless devices 100a to 100f may include, without being limited to, a robot 100a, vehicles 100b-1 and 100b-2, an extended reality (XR) device 100c, a hand-held device 100d, a home appliance 100e, an IoT device 100f, and an artificial intelligence (AI) device/server 400. For example, the vehicles may include a vehicle having a wireless communication function, an autonomous driving vehicle, and a vehicle capable of performing communication between vehicles. The vehicles may include an unmanned aerial vehicle (UAV) (e.g., a drone). The XR device may include an AR/VR/Mixed Reality (MR) device and may be implemented in the form of a head-mounted device (HMD), a head-up display (HUD) mounted in a vehicle, a television, a smartphone, a computer, a wearable device, a home appliance device, a digital signage, a vehicle, a robot, etc. The hand-held device may include a smartphone, a smartpad, a wearable device (e.g., a smartwatch or a smartglasses), and a computer (e.g., a notebook). The home appliance may include a TV, a refrigerator, and a washing machine. The IoT device may include a sensor and a smartmeter.

In the present disclosure, the wireless devices 100a to 100f may be called user equipments (UEs). A UE may include, for example, a cellular phone, a smartphone, a laptop computer, a digital broadcast terminal, a personal digital assistant (PDA), a portable multimedia player (PMP), a navigation system, a slate personal computer (PC), a tablet PC, an ultrabook, a vehicle, a vehicle having an autonomous traveling function, a connected car, an UAV, an AI module, a robot, an AR device, a VR device, an MR device, a hologram device, a public safety device, an MTC device, an IoT device, a medical device, a FinTech device (or a financial device), a security device, a weather/environment device, a device related to a 5G service, or a device related to a fourth industrial revolution field.

The UAV may be, for example, an aircraft aviated by a wireless control signal without a human being onboard.

The VR device may include, for example, a device for implementing an object or a background of the virtual world. The AR device may include, for example, a device implemented by connecting an object or a background of the virtual world to an object or a background of the real world. The MR device may include, for example, a device implemented by merging an object or a background of the virtual world into an object or a background of the real world. The hologram device may include, for example, a device for implementing a stereoscopic image of 360 degrees by recording and reproducing stereoscopic information, using an interference phenomenon of light generated when two laser lights called holography meet.

The public safety device may include, for example, an image relay device or an image device that is wearable on the body of a user.

The MTC device and the IoT device may be, for example, devices that do not require direct human intervention or manipulation. For example, the MTC device and the IoT device may include smartmeters, vending machines, thermometers, smartbulbs, door locks, or various sensors.

The medical device may be, for example, a device used for the purpose of diagnosing, treating, relieving, curing, or preventing disease. For example, the medical device may be a device used for the purpose of diagnosing, treating, relieving, or correcting injury or impairment. For example, the medical device may be a device used for the purpose of inspecting, replacing, or modifying a structure or a function. For example, the medical device may be a device used for the purpose of adjusting pregnancy. For example, the medical device may include a device for treatment, a device for operation, a device for (in vitro) diagnosis, a hearing aid, or a device for procedure.

The security device may be, for example, a device installed to prevent a danger that may arise and to maintain safety. For example, the security device may be a camera, a closed-circuit TV (CCTV), a recorder, or a black box.

The FinTech device may be, for example, a device capable of providing a financial service such as mobile payment. For example, the FinTech device may include a payment device or a point of sales (POS) system.

The weather/environment device may include, for example, a device for monitoring or predicting a weather/environment.

The wireless devices 100a to 100f may be connected to the network 300 via the BSs 200. An AI technology may be applied to the wireless devices 100a to 100f and the wireless devices 100a to 100f may be connected to the AI server 400 via the network 300. The network 300 may be configured using a 3G network, a 4G (e.g., LTE) network, a 5G (e.g., NR) network, and a beyond-5G network. Although the wireless devices 100a to 100f may communicate with each other through the BSs 200/network 300, the wireless devices 100a to 100f may perform direct communication (e.g., sidelink communication) with each other without passing through the BSs 200/network 300. For example, the vehicles 100b-1 and 100b-2 may perform direct communication (e.g., vehicle-to-vehicle (V2V)/vehicle-to-everything (V2X) communication). The IoT device (e.g., a sensor) may perform direct communication with other IoT devices (e.g., sensors) or other wireless devices 100a to 100f.

Wireless communication/connections 150a, 150b and 150c may be established between the wireless devices 100a to 100f and/or between wireless device 100a to 100f and BS 200 and/or between BSs 200. Herein, the wireless communication/connections may be established through various RATs (e.g., 5G NR) such as uplink/downlink communication 150a, sidelink communication (or device-to-device (D2D) communication) 150b, inter-base station communication 150c (e.g., relay, integrated access and backhaul (IAB)), etc. The wireless devices 100a to 100f and the BSs 200/the wireless devices 100a to 100f may transmit/receive radio signals to/from each other through the wireless communication/connections 150a, 150b and 150c. For example, the wireless communication/connections 150a, 150b and 150c may transmit/receive signals through various physical channels. To this end, at least a part of various configuration information configuring processes, various signal processing processes (e.g., channel encoding/decoding, modulation/demodulation, and resource mapping/de-mapping), and resource allocating processes, for transmitting/receiving radio signals, may be performed based on the various proposals of the present disclosure.

AI refers to the field of studying artificial intelligence or the methodology that can create it, and machine learning refers to the field of defining various problems addressed in the field of AI and the field of methodology to solve them. Machine learning is also defined as an algorithm that increases the performance of a task through steady experience on a task.

Robot means a machine that automatically processes or operates a given task by its own ability. In particular, robots with the ability to recognize the environment and make self-determination to perform actions can be called intelligent robots. Robots can be classified as industrial, medical, home, military, etc., depending on the purpose or area of use. The robot can perform a variety of physical operations, such as moving the robot joints with actuators or motors. The movable robot also includes wheels, brakes, propellers, etc., on the drive, allowing it to drive on the ground or fly in the air.

Autonomous driving means a technology that drives on its own, and autonomous vehicles mean vehicles that drive without user's control or with minimal user's control. For example, autonomous driving may include maintaining lanes in motion, automatically adjusting speed such as adaptive cruise control, automatic driving along a set route, and automatically setting a route when a destination is set. The vehicle covers vehicles equipped with internal combustion engines, hybrid vehicles equipped with internal combustion engines and electric motors, and electric vehicles equipped with electric motors, and may include trains, motorcycles, etc., as well as cars. Autonomous vehicles can be seen as robots with autonomous driving functions.

Extended reality is collectively referred to as VR, AR, and MR. VR technology provides objects and backgrounds of real world only through computer graphic (CG) images. AR technology provides a virtual CG image on top of a real object image. MR technology is a CG technology that combines and combines virtual objects into the real world. MR technology is similar to AR technology in that they show real and virtual objects together. However, there is a difference in that in AR technology, virtual objects are used as complementary forms to real objects, while in MR technology, virtual objects and real objects are used as equal personalities.

NR supports multiples numerologies (and/or multiple subcarrier spacings (SCS)) to support various 5G services. For example, if SCS is 15 kHz, wide area can be supported in traditional cellular bands, and if SCS is 30 kHz/60 kHz, dense-urban, lower latency, and wider carrier bandwidth can be supported. If SCS is 60 kHz or higher, bandwidths greater than 24.25 GHz can be supported to overcome phase noise.

The NR frequency band may be defined as two types of frequency range, i.e., FR1 and FR2. The numerical value of the frequency range may be changed. For example, the frequency ranges of the two types (FR1 and FR2) may be as shown in Table 1 below. For ease of explanation, in the frequency ranges used in the NR system, FR1 may mean "sub 6 GHz range", FR2 may mean "above 6 GHz range," and may be referred to as millimeter wave (mmW).

**[Table 1]**

| Frequency Range designation | Corresponding frequency range | Subcarrier Spacing |
|---|---|---|
| FR1 | 450MHz - 6000MHz | 15, 30, 60kHz |
| FR2 | 24250MHz - 52600MHz | 60, 120, 240kHz |

As mentioned above, the numerical value of the frequency range of the NR system may be changed. For example, FR1 may include a frequency band of 410MHz to 7125MHz as shown in Table 2 below. That is, FR1 may include a frequency band of 6GHz (or 5850, 5900, 5925 MHz, etc.) or more. For example, a frequency band of 6 GHz (or 5850, 5900, 5925 MHz, etc.) or more included in FR1 may include an unlicensed band. Unlicensed bands may be used for a variety of purposes, for example for communication for vehicles (e.g., autonomous driving).

**[Table 2]**

| Frequency Range designation | Corresponding frequency range | Subcarrier Spacing |
|---|---|---|
| FR1 | 410MHz - 7125MHz | 15, 30, 60kHz |
| FR2 | 24250MHz - 52600MHz | 60, 120, 240kHz |

Here, the radio communication technologies implemented in the wireless devices in the present disclosure may include narrowband internet-of things (NB-IoT) technology for low-power communication as well as LTE, NR and 6G. For example, NB-IoT technology may be an example of low power wide area network (LPWAN) technology, may be implemented in specifications such as LTE Cat NB1 and/or LTE Cat NB2, and may not be limited to the above-mentioned names. Additionally and/or alternatively, the radio communication technologies implemented in the wireless devices in the present disclosure may communicate based on LTE-M technology. For example, LTE-M technology may be an example of LPWAN technology and be called by various names such as enhanced machine type communication (eMTC). For example, LTE-M technology may be implemented in at least one of the various specifications, such as 1) LTE Cat 0, 2) LTE Cat M1, 3) LTE Cat M2, 4) LTE non-bandwidth limited (non-BL), 5) LTE-MTC, 6) LTE Machine Type Communication, and/or 7) LTE M, and may not be limited to the above-mentioned names. Additionally and/or alternatively, the radio communication technologies implemented in the wireless devices in the present disclosure may include at least one of ZigBee, Bluetooth, and/or LPWAN which take into account low-power communication, and may not be limited to the above-mentioned names. For example, ZigBee technology may generate personal area networks (PANs) associated with small/low-power digital communication based on various specifications such as IEEE 802.15.4 and may be called various names.

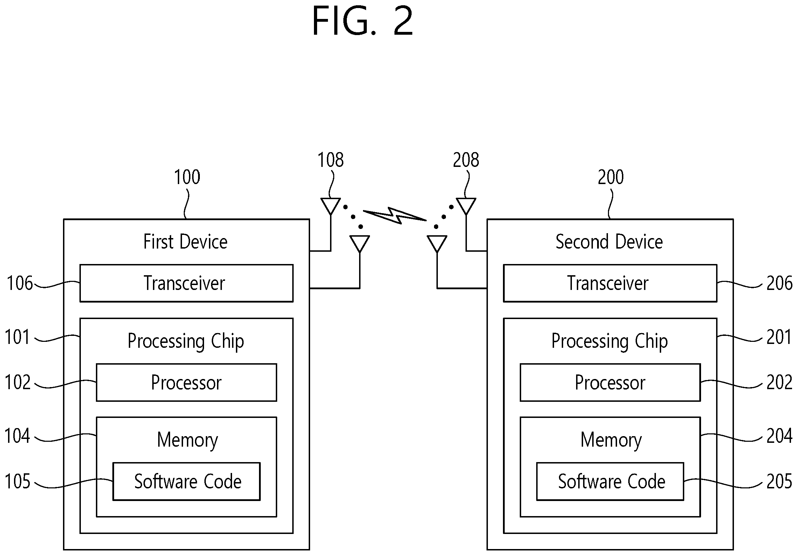

**FIG. 2** **shows an example of wireless devices to which implementations of the present disclosure is applied.**

In FIG. 2, The first wireless device 100 and/or the second wireless device 200 may be implemented in various forms according to use cases/services. For example, {the first wireless device 100 and the second wireless device 200} may correspond to at least one of {the wireless device 100a to 100f and the BS 200}, {the wireless device 100a to 100f and the wireless device 100a to 100f} and/or {the BS 200 and the BS 200} of FIG. 1. The first wireless device 100 and/or the second wireless device 200 may be configured by various elements, devices/parts, and/or modules.

The first wireless device 100 may include at least one transceiver, such as a transceiver 106, at least one processing chip, such as a processing chip 101, and/or one or more antennas 108.

The processing chip 101 may include at least one processor, such a processor 102, and at least one memory, such as a memory 104. Additional and/or alternatively, the memory 104 may be placed outside of the processing chip 101.

The processor 102 may control the memory 104 and/or the transceiver 106 and may be adapted to implement the descriptions, functions, procedures, suggestions, methods and/or operational flowcharts described in the present disclosure. For example, the processor 102 may process information within the memory 104 to generate first information/signals and then transmit radio signals including the first information/signals through the transceiver 106. The processor 102 may receive radio signals including second information/signals through the transceiver 106 and then store information obtained by processing the second information/signals in the memory 104.

The memory 104 may be operably connectable to the processor 102. The memory 104 may store various types of information and/or instructions. The memory 104 may store a firmware and/or a software code 105 which implements codes, commands, and/or a set of commands that, when executed by the processor 102, perform the descriptions, functions, procedures, suggestions, methods and/or operational flowcharts disclosed in the present disclosure. For example, the firmware and/or the software code 105 may implement instructions that, when executed by the processor 102, perform the descriptions, functions, procedures, suggestions, methods and/or operational flowcharts disclosed in the present disclosure. For example, the firmware and/or the software code 105 may control the processor 102 to perform one or more protocols. For example, the firmware and/or the software code 105 may control the processor 102 to perform one or more layers of the radio interface protocol.

Herein, the processor 102 and the memory 104 may be a part of a communication modem/circuit/chip designed to implement RAT (e.g., LTE or NR). The transceiver 106 may be connected to the processor 102 and transmit and/or receive radio signals through one or more antennas 108. Each of the transceiver 106 may include a transmitter and/or a receiver. The transceiver 106 may be interchangeably used with Radio Frequency (RF) unit(s). In the present disclosure, the first wireless device 100 may represent a communication modem/circuit/chip.

The second wireless device 200 may include at least one transceiver, such as a transceiver 206, at least one processing chip, such as a processing chip 201, and/or one or more antennas 208.

The processing chip 201 may include at least one processor, such a processor 202, and at least one memory, such as a memory 204. Additional and/or alternatively, the memory 204 may be placed outside of the processing chip 201.

The processor 202 may control the memory 204 and/or the transceiver 206 and may be adapted to implement the descriptions, functions, procedures, suggestions, methods and/or operational flowcharts described in the present disclosure. For example, the processor 202 may process information within the memory 204 to generate third information/signals and then transmit radio signals including the third information/signals through the transceiver 206. The processor 202 may receive radio signals including fourth information/signals through the transceiver 106 and then store information obtained by processing the fourth information/signals in the memory 204.

The memory 204 may be operably connectable to the processor 202. The memory 204 may store various types of information and/or instructions. The memory 204 may store a firmware and/or a software code 205 which implements codes, commands, and/or a set of commands that, when executed by the processor 202, perform the descriptions, functions, procedures, suggestions, methods and/or operational flowcharts disclosed in the present disclosure. For example, the firmware and/or the software code 205 may implement instructions that, when executed by the processor 202, perform the descriptions, functions, procedures, suggestions, methods and/or operational flowcharts disclosed in the present disclosure. For example, the firmware and/or the software code 205 may control the processor 202 to perform one or more protocols. For example, the firmware and/or the software code 205 may control the processor 202 to perform one or more layers of the radio interface protocol.

Herein, the processor 202 and the memory 204 may be a part of a communication modem/circuit/chip designed to implement RAT (e.g., LTE or NR). The transceiver 206 may be connected to the processor 202 and transmit and/or receive radio signals through one or more antennas 208. Each of the transceiver 206 may include a transmitter and/or a receiver. The transceiver 206 may be interchangeably used with RF unit. In the present disclosure, the second wireless device 200 may represent a communication modem/circuit/chip.

Hereinafter, hardware elements of the wireless devices 100 and 200 will be described more specifically. One or more protocol layers may be implemented by, without being limited to, one or more processors 102 and 202. For example, the one or more processors 102 and 202 may implement one or more layers (e.g., functional layers such as Physical (PHY) layer, Media Access Control (MAC) layer, Radio Link Control (RLC) layer, Packet Data Convergence Protocol (PDCP) layer, Radio Resource Control (RRC) layer, and Service Data Adaptation Protocol (SDAP) layer). The one or more processors 102 and 202 may generate one or more Protocol Data Units (PDUs), one or more Service Data Unit (SDUs), messages, control information, data, or information according to the descriptions, functions, procedures, suggestions, methods and/or operational flowcharts disclosed in the present disclosure. The one or more processors 102 and 202 may generate signals (e.g., baseband signals) including PDUs, SDUs, messages, control information, data, or information according to the descriptions, functions, procedures, suggestions, methods and/or operational flowcharts disclosed in the present disclosure and provide the generated signals to the one or more transceivers 106 and 206. The one or more processors 102 and 202 may receive the signals (e.g., baseband signals) from the one or more transceivers 106 and 206 and acquire the PDUs, SDUs, messages, control information, data, or information according to the descriptions, functions, procedures, suggestions, methods and/or operational flowcharts disclosed in the present disclosure.

The one or more processors 102 and 202 may be referred to as controllers, microcontrollers, microprocessors, or microcomputers. The one or more processors 102 and 202 may be implemented by hardware, firmware, software, or a combination thereof. As an example, one or more Application Specific Integrated Circuits (ASICs), one or more Digital Signal Processors (DSPs), one or more Digital Signal Processing Devices (DSPDs), one or more Programmable Logic Devices (PLDs), or one or more Field Programmable Gate Arrays (FPGAs) may be included in the one or more processors 102 and 202. For example, the one or more processors 102 and 202 may be configured by a set of a communication control processor, an Application Processor (AP), an Electronic Control Unit (ECU), a Central Processing Unit (CPU), a Graphic Processing Unit (GPU), and a memory control processor.

The one or more memories 104, 204 may be associated with the one or more processors 102, 202 and may store various forms of data, signals, messages, information, programs, codes, instructions, and/or commands. The one or more memories 104, 204 may comprise random access memory (RAM), dynamic RAM (DRAM), read-only memory (ROM), erasable programmable ROM (EPROM), flash memory, volatile memory, non-volatile memory, hard drives, registers, cache memory, computer-readable storage media, and/or combinations thereof. The one or more memories 104, 204 may be located inside and/or outside of the one or more processors 102, 202. Further, the one or more memories 104, 204 may be coupled to the one or more processors 102, 202 via various technologies, such as wired or wireless connections.

The one or more transceivers 106, 206 may transmit user data, control information, wireless signals/channels, etc. referred to in the descriptions, features, procedures, suggestions, methods, and/or flowcharts of operation disclosed herein to one or more other devices. The one or more transceivers 106, 206 may receive user data, control information, wireless signals/channels, etc. referred to in the descriptions, features, procedures, suggestions, methods, and/or flowcharts of operation disclosed herein from one or more other devices. For example, the one or more transceivers 106, 206 may be associated with the one or more processors 102, 202 and may transmit and receive wireless signals. For example, the one or more processors 102, 202 may control the one or more transceivers 106, 206 to transmit user data, control information, wireless signals, etc. to one or more other devices. Further, the one or more processors 102, 202 may control the one or more transceivers 106, 206 to receive user data, control information, wireless signals, etc. from the one or more other devices.

The one or more transceivers 106, 206 may be associated with one or more antennas 108, 208. Additionally and/or alternatively, the one or more transceivers 106, 206 may include one or more antennas 108, 208. The one or more transceivers 106, 206 may be configured to transmit and receive, via the one or more antennas 108, 208, user data, control information, wireless signals/channels, etc. referred to in the descriptions, features, procedures, suggestions, methods, and/or flowcharts of operation disclosed herein. As used herein, the one or more antennas 108, 208 may be a plurality of physical antennas, or a plurality of logical antennas (e.g., antenna ports).

The one or more transceivers 106, 206 may convert the received user data, control information, radio signals/channels, etc. from RF band signals to baseband signals in order to process the received user data, control information, radio signals/channels, etc. using the one or more processors 102, 202. The one or more transceivers 106, 206 may convert the processed user data, control information, radio signals/channels, etc. from baseband signals to RF band signals using the one or more processors 102, 202. To do so, the one or more transceivers 106, 206 may include (analog) oscillators and/or filters. For example, the one or more transceivers 106, 206 may up-convert an OFDM baseband signal to an OFDM signal via an (analog) oscillator and/or filter under the control of the one or more processors 102, 202, and transmit the up-converted OFDM signal at the carrier frequency. The one or more transceivers 106, 206 may receive the OFDM signal at the carrier frequency and, under the control of the one or more processors 102, 202, down-convert the OFDM signal to an OFDM baseband signal via an (analog) oscillator and/or filter.

Although not shown in FIG. 2, the wireless devices 100 and 200 may further include additional components. The additional components 140 may be variously configured according to types of the wireless devices 100 and 200. For example, the additional components 140 may include at least one of a power unit/battery, an Input/Output (I/O) device (e.g., audio I/O port, video I/O port), a driving device, and a computing device. The additional components 140 may be coupled to the one or more processors 102 and 202 via various technologies, such as a wired or wireless connection.

In the implementations of the present disclosure, a UE may operate as a transmitting device in Uplink (UL) and as a receiving device in Downlink (DL). In the implementations of the present disclosure, a BS may operate as a receiving device in UL and as a transmitting device in DL. Hereinafter, for convenience of description, it is mainly assumed that the first wireless device 100 acts as the UE, and the second wireless device 200 acts as the BS. For example, the processor(s) 102 connected to, mounted on or launched in the first wireless device 100 may be adapted to perform the UE behavior according to an implementation of the present disclosure or control the transceiver(s) 106 to perform the UE behavior according to an implementation of the present disclosure. The processor(s) 202 connected to, mounted on or launched in the second wireless device 200 may be adapted to perform the BS behavior according to an implementation of the present disclosure or control the transceiver(s) 206 to perform the BS behavior according to an implementation of the present disclosure.

In the present disclosure, a BS is also referred to as a node B (NB), an eNode B (eNB), or a gNB.

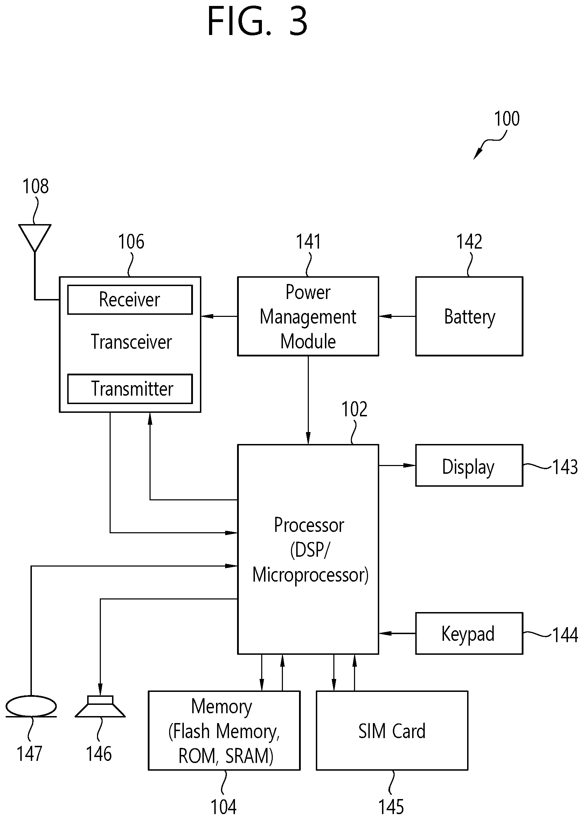

**FIG. 3** **shows an example of UE to which implementations of the present disclosure is applied.**

FIG. 3 shows an example of UE to which implementations of the present disclosure is applied.

Referring to FIG. 3, a UE 100 may correspond to the first wireless device 100 of FIG. 2.

A UE 100 includes a processor 102, a memory 104, a transceiver 106, one or more antennas 108, a power management module 141, a battery 142, a display 143, a keypad 144, a Subscriber Identification Module (SIM) card 145, a speaker 146, and a microphone 147.

The processor 102 may be adapted to implement the descriptions, functions, procedures, suggestions, methods and/or operational flowcharts disclosed in the present disclosure. The processor 102 may be adapted to control one or more other components of the UE 100 to implement the descriptions, functions, procedures, suggestions, methods and/or operational flowcharts disclosed in the present disclosure. Layers of the radio interface protocol may be implemented in the processor 102. The processor 102 may include ASIC, other chipset, logic circuit and/or data processing device. The processor 102 may be an application processor. The processor 102 may include at least one of DSP, CPU, GPU, a modem (modulator and demodulator). An example of the processor 102 may be found in SNAPDRAGON^{™} series of processors made by Qualcomm^{®}, EXYNOS^{™} series of processors made by Samsung^{®}, A series of processors made by Apple^{®}, HELIO^{™} series of processors made by MediaTek^{®}, ATOM^{™} series of processors made by Intel^{®} or a corresponding next generation processor.

The memory 104 is operatively coupled with the processor 102 and stores a variety of information to operate the processor 102. The memory 104 may include ROM, RAM, flash memory, memory card, storage medium and/or other storage device. When the embodiments are implemented in software, the techniques described herein can be implemented with modules (e.g., procedures, functions, etc.) that perform the descriptions, functions, procedures, suggestions, methods and/or operational flowcharts disclosed in the present disclosure. The modules can be stored in the memory 104 and executed by the processor 102. The memory 104 can be implemented within the processor 102 or external to the processor 102 in which case those can be communicatively coupled to the processor 102 via various means as is known in the art.

The transceiver 106 is operatively coupled with the processor 102, and transmits and/or receives a radio signal. The transceiver 106 includes a transmitter and a receiver. The transceiver 106 may include baseband circuitry to process radio frequency signals. The transceiver 106 controls the one or more antennas 108 to transmit and/or receive a radio signal.

The power management module 141 manages power for the processor 102 and/or the transceiver 106. The battery 142 supplies power to the power management module 141.

The display 143 outputs results processed by the processor 102. The keypad 144 receives inputs to be used by the processor 102. The keypad 144 may be shown on the display 143.

The SIM card 145 is an integrated circuit that is intended to securely store the International Mobile Subscriber Identity (IMSI) number and its related key, which are used to identify and authenticate subscribers on mobile telephony devices (such as mobile phones and computers). It is also possible to store contact information on many SIM cards.

The speaker 146 outputs sound-related results processed by the processor 102. The microphone 147 receives sound-related inputs to be used by the processor 102.

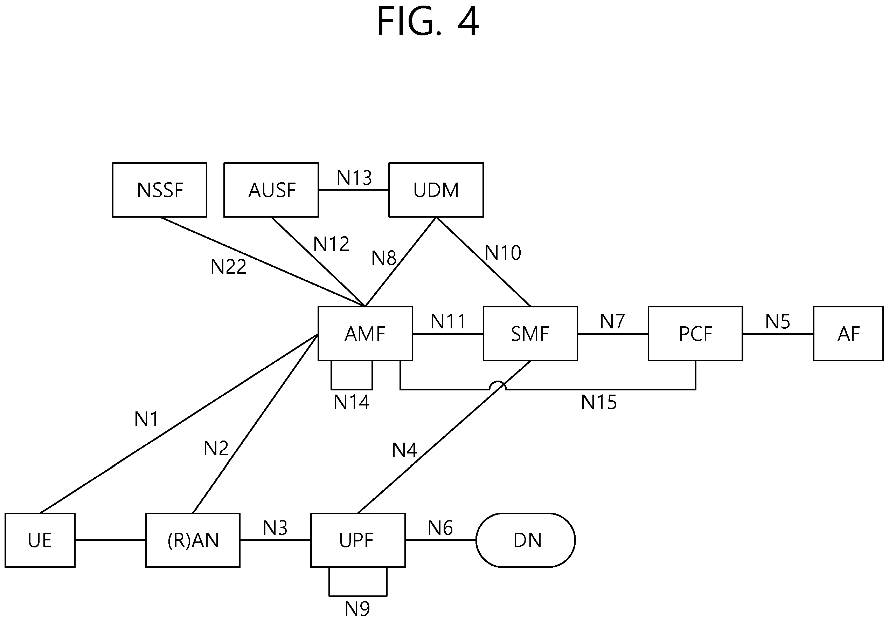

**FIG. 4** **illustrates an example 5G system structure to which an implementation of the present specification may be applied.**

The 5G system (5GS; 5G system) structure consists of the following network functions (NFs).
- AUSF (Authentication Server Function)
- AMF (Access and Mobility Management Function)
- DN (Data Network), e.g., operator services, internet access or third-party services
- USDF (Unstructured Data Storage Function)
- NEF (Network Exposure Function)
- I-NEF (Intermediate NEF)
- NRF (Network Repository Function)
- NSSF (Network Slice Selection Function)
- PCF (Policy Control Function)
- SMF (Session Management Function)
- UDM (Unified Data Management)
- UDR (Unified Data Repository)
- UPF (User Plane Function)
- UCMF (UE radio Capability Management Function)
- AF (Application Function)
- UE (User Equipment)
- (R)AN ((Radio) Access Network)
- 5G-EIR (5G-Equipment Identity Register)
- NWDAF (Network Data Analytics Function)
- CHF (Charging Function)

In addition, the following network functions may be considered.
- N3IWF (Non-3GPP InterWorking Function)
- TNGF (Trusted Non-3GPP Gateway Function)
- W-AGF (Wireline Access Gateway Function)

FIG. 4 shows the 5G system structure of a non-roaming case using a reference point representation that shows how various network functions interact with each other.

In FIG. 4, UDSF, NEF and NRF are not described for clarity of the point-to-point diagram. However, all network functions shown may interact with UDSF, UDR, NEF and NRF as needed.

For clarity, the connection between the UDR and other NFs (e.g., PCFs) is not shown in FIG. 4. For clarity, the connection between NWDAF and other NFs (e.g. PCFs) is not shown in FIG. 4.

The 5G system architecture includes the following reference points.
- N1: the reference point between the UE and the AMF.
- N2: reference point between (R)AN and AMF.
- N3: Reference point between (R)AN and UPF.
- N4: reference point between SMF and UPF.
- N6: Reference point between UPF and data network.
- N9: reference point between two UPFs.

The following reference points show the interactions that exist between NF services in NF.
- N5: Reference point between PCF and AF.
- N7: reference point between SMF and PCF.
- N8: reference point between UDM and AMF.
- N10: reference point between UDM and SMF.
- N11: reference point between AMF and SMF.
- N12: reference point between AMF and AUSF.
- N13: reference point between UDM and AUSF.
- N14: reference point between two AMFs.
- N15: Reference point between PCF and AMF in case of non-roaming scenario, and reference point between PCF and AMF of visited network in case of roaming scenario.
- N16: reference point between two SMFs (in case of roaming, between the SMF of the visited network and the SMF of the home network)
- N22: reference point between AMF and NSSF.

In some cases, it may be necessary to connect two NFs to each other to service the UE.

### <Local service>

Providing access to local services refers to the capability to provide access to a hosting network and a set of services offered by the hosting network provider, and 3rd party service providers including other network operators and 3rd party application providers. The services may be localized (i.e. provided at specific/limited area) and may be bounded in time. The user may become aware of the available access to local services, and the process to gain and terminate access to the hosting network and local services. This process should be efficient, and convenient from a user experience standpoint.

Providing access to local services creates new opportunities for users and service providers. For example, access can be provided in areas where there is no coverage provided by other networks (for example, on a fairground established far from other infrastructure). or the access and local services can be established as needed (on a short-term basis), without the need for long term business relationships, permanently installed equipment, etc.

The type of local services and access for localized services via a hosting network can be promoted and arranged through different channels. Principally the service operators (e.g., brick and mortar businesses, entertainment venues, construction contractors, first responder agencies, etc.) will provide information and proper incentive or instructions to potential users so that they will seek to access the local services via hosting networks.

### I. Requirements of Local Service

In the requirements below, it is assumed that:
- Both the home network and the hosting network can be a PLMN or NPN.
- Only subscribers of a public network can roam into a PLMN.

### 1. Configuration of Localized Services in Hosting Network

The 5G system shall support suitable mechanisms to allow automatically establishing localized service agreements for a specific occasion (time and location) and building temporary relationship among hosting network operator and other service operators including network operators or 3rd party application providers.

The 5G system shall support means for the service operator to request the hosting network via standard mechanisms to provide access to 3rd party services at a specific period of time and location. This period of time shall be flexible, so that a change in service provision can be decided at any time (e.g., to cancel or prolong local services in the locality of service delivery) based on localized services agreements.

Based on localized services agreements, the 5G system shall provide suitable means to allow the service operator to request and provision various localized service requirements, including QoS, expected/maximum number of users, event information for discovery, network slicing, required IP connectivity etc, and routing policies for the application of the localized services via the hosting network.

The 5G system shall support means for a hosting network to create policies and configure resources for the requested time and location for the 3rd party services based on the received request.

The 5G system shall support means for a hosting network to notify the service operator of the accepted service parameters and routing policies.

Subject to regulatory requirements and localized service agreements, the 5G system shall allow a home network operator to automatically negotiate policies with the hosting network for allowing the home network's subscribers to connect at a specific occasion, e.g., time and location, for their home network services.

Subject to the automatic localized services agreements between the hosting network operator and home network operator, for UE with only home network subscription and with authorization to access hosting networks the 5G system shall support:
- access to the hosting network and use home network services or selected localized services via the hosting network,
- seamless service continuity for home network services or selected localized services when moving between two hosting networks or a host network and the home network.

The 5G system shall support a mechanism to enable configuration of a network that provides access to localized services such that the services can be limited in terms of their spatial extent (in terms of a particular topology, for example a single cell), as specified by a 3rd party.

The 5G system shall support a mechanism to enable configuration of a network that provides access to localized services such that the services can be limited in terms of the resources or capacity available, to correspond to requirements that apply only to the locality of service delivery, as specified by a service provider of localized services.

The 5G system shall support means for a hosting network to provide a 3rd party service provider with information for automatic discovery of the hosting network by the UEs to allow access to specific 3rd party services.

The 5G system shall support secure mechanisms to allow a home network to coordinate with a hosting network for a subscriber to temporarily access the hosting network (e.g., based on temporary credentials) at a given time (start time and duration) and location.

### 2. User Manual Selection of Localized Services via Hosting Network

The hosting network shall allow a UE to manually select temporary localized services which are provided via local breakout at the hosting network.

Localized services are provided via local breakout at the hosting network can be based on interworking scenarios for hosting network owned/collaborative services.

### 3. UE Configuration, Provisioning, Authentication and Authorization

Subject to localized services agreements, the 5G system shall enable a home network operator to authorize a UE for using its home network services via a hosting network for a certain period of time and/or location.

The 5G system shall allow a trusted 3rd party service provider to provide UEs with localized service policy (e.g., QoS, network slice in the hosting or home network, service restriction such as time and location) via the hosting network or the UE's home network.

The 5G system shall enable a UE to use credentials provided by the hosting network with or without coordination with the home network of the UE, to make use of localized services via the hosting network with a certain time (including starting time and the duration) and location validity.

The 5G system shall be able to allow the home network to steer its UE(s) to a hosting network with the consideration of the location, times, coverage of the hosting network and services offered by the home network and hosting network.

The 5G system shall provide support to enable secure means to authenticate and authorize a user of a UE accessing a hosting network, including cases in which a UE has no subscription to the hosting network and still needs to get authorized to use localized services via the hosting network.

It can be assumed that a network provider deploying a hosting network has access to respective identification information about the user, e.g., through a separate registration process outside the scope of 3GPP.

The 5G system shall be able to authenticate and authorize the UE of a user authenticated to a hosting network to access the hosting network and its localized services on request of a service provider.

### 4 UE Discovery, Selection and Access

Subject to operator's policy and agreement between a 3rd party service provider and operator, the 5G system shall enable a UE to receive and use configuration provided by a 3rd party service provider to discover and access a hosting network and localized services, including the considerations of prior service agreement with a 3rd party service provider and no prior subscription to hosting network. If the UE is able to obtain services from two networks simultaneously, it may additionally select the hosting network. If the UE cannot maintain the connection to the home network while selecting the hosting network, the selection shall only be done on request by the user, i.e., using manual selection.

The 5G system shall support secure means for a UE to select and access localized services which may be provided by a 3rd party service provider via a hosting network, independent of prior subscription to the hosting network or 3rd party service provider.

The 5G system shall enable the home network to allow a UE to automatically select a hosting network for accessing localized services when specified conditions (e.g., predefined time, location) are fulfilled.

The 5G system shall be able to prevent a UE to re-access the hosting network after the localized services were terminated if the authorization for the localized services is no longer valid (e.g., can be based on certain conditions such as time or location of the user).

The 5G system may support means for a UE which may or may not have prior subscription to the hosting network to display human readable information on how to gain access to the hosting network and available 3rd party services.

The 5G system shall support a mechanism to allow a user to manually select a specific local hosting network.

Additional information can be presented to the user to facilitate the manual network selection.

The 5G system shall be able to limit access of specific UEs to a configurable area of a hosting network's coverage area.

The 5G system shall be able to maintain privacy of a user against the hosting network while the UE does not make use of the hosting network, for example, to prevent tracking of UEs by hosting networks.

The 5G system shall enable the home network to instruct a UE to select a hosting network with certain conditions (e.g., predefined time, location) based on the request from a service provider.

The 5G system shall enable the home network to allow a UE to select a hosting network or change to another hosting network, without any additional user intervention as long as the delivered services, both localized services and home routed services, are unchanged.

5 Hosting Network Localized Services and Home Operator Services

The 5G system shall enable the home network operator to indicate to the UE what services are preferred to be used from the home network when the UE connects to a hosting network and the requested services are available from both the hosting and the home network.

Based on localized service agreements, the hosting network shall be able to provide required connectivity and QoS for a UE simultaneously connected to the hosting network for localized services and its home network for home network services.

A UE shall be able to connect to its home network via the hosting network, if supported by the hosting network and the home network based on localized service agreements.

### 6. Returning to Home Network

The 5G system shall provide mechanisms to mitigate user plane and control plane overload caused by a high number of UEs returning from a temporary local access of a hosting network to their home network in a very short period of time.

The 5G system shall provide mechanisms to minimize the impact on the UEs communication e.g., to prevent user plane and control plane outages when returning to a home network together with other high number of UEs in a very short period of time, after terminating their temporary local access to a hosting network.

### 7 Charging

The 5G system shall be able to collect charging information for the use of localized services at the hosting network and provide the charging records to UEs' home operators based on localized service agreements and charging policies provided by the service providers of localized services.

### 8. Regulatory Services

A hosting network using the 5G system shall be able to support regulatory services (e.g., PWS, LI, and emergency calls), based on regional/national regulatory requirements.

### 9. Multicast/Broadcast

The operator of a hosting network shall support a mechanism allowing different service providers of localized services to disseminate their services and content over broadcast/multicast transport. This mechanism should also provide means to include diverse content in the same transmission, e.g., to include advertisements with other content, or to include multiple content in the same media delivered to the user.

A hosting network shall provide multicast and broadcast services in an energy efficient manner to UEs receiving this service.

A hosting network shall support resource efficient content delivery through multicast/broadcast.

A hosting network shall support a mechanism to provide low latency signalling for efficient content delivery to many UEs.

Subject to home operator policy, a hosting network shall be able to prioritize specific multicast and broadcast services for local access over home routed access, even if the same service is available in both networks.

### II. Support for returning to home network

when local service is over, large number of UEs would attempt registration back to their home network. This may lead to a signaling peak in the home network and result in user plane and control plane overload causing for example longer waiting for users to re-register to/re-select their home network.

There are various load control mechanisms already defined e.g.:
- Access control and barring;
- Control Plane Load Control, Congestion and Overload Control;
- Prevention of signaling overload related to Disaster Condition and Disaster Roaming service.

This key issue aims to study whether the existing mechanisms for overload control in the network can support all the requirements in section I and whether any enhancements or additional mechanisms need to be defined. The following aspects will be considered:
- How to mitigate user plane and control plane overload caused by a high number of UEs returning from a temporary local access of a hosting network to their home network in a very short period of time.
- How to minimize the impact on the UE's communication e.g. to prevent user plane and control plane outages when returning to a home network together with other high number of UEs in a very short period of time, after terminating their temporary local access to a hosting network.

### <Disclosure of the present specification>

The following methods are proposed herein to address the problem. The methods presented below may be performed or used in combination or complementarily. The suggestions below assume that the redirection is performed during the registration procedure, but may work similarly during the service request procedure.

This section describes the case where the UE uses temporary credentials to access the hosting network. In this case, the AMF may not know the UE's home network. This may be easily solved if the UE is able to indicate the UE's home network ID.

Option 1: The UE may provide the home network information to the AMF during registration with the hosting network by indicating the home network ID.

Alternatively, the UE may send the home network information together with the previous serving network information (if it was roaming).

Alternatively, the UE may provide the home network information implicitly. For example, according to the current registration procedure, the UE may be required to provide the network with the latest valid 5G-GUTI (with NID in case of SNPN assigned case). As the 5G-GUTI includes the PLMN ID, the AMF may know the UE's home network.

There may be four scenarios as shown in Table 3.

**[table 3]**

| | Ho me network | Hostin g network | Applica bility |
|---|---|---|---|
| Scenario A | PLMN | PNI-NPN | O |
| Scenario B | PLMN | SNPN | X |
| Scenario C | SNPN | PNI-NPN | X |
| Scenario D | SNPN | SNPN | O |

The UE may include 5G-GUTI as follows. When the UE is performing an Initial Registration or a Disaster Roaming Registration, the UE may indicate its UE identity in the Registration Request message as follows, listed in decreasing order of preference in the case of registration with a PLMN:
i) a 5G-GUTI mapped from an EPS GUTI, if the UE has a valid EPS GUTI.
ii) a native 5G-GUTI assigned by the PLMN to which the UE is attempting to register, if available;
iii) a native 5G-GUTI assigned by an equivalent PLMN to the PLMN to which the UE is attempting to register, if available;
iv) a native 5G-GUTI assigned by any other PLMN, if available.

This may also be a 5G-GUTIs assigned via another access type.
v) Otherwise, the UE may need to include its SUCI in the Registration Request.

If the UE is registering with an SNPN, when the UE is performing an Initial Registration the UE may need to indicate its UE identity in the Registration Request message as follows, listed in decreasing order of preference:
i) a native 5G-GUTI assigned by the same SNPN to which the UE is attempting to register, if available;
ii) a native 5G-GUTI assigned by any other SNPN along with the NID of the SNPN that assigned the 5G-GUTI, if available;
iii) Otherwise, the UE shall include its SUCI in the Registration Request as defined in TS 33.501 [15].

For scenario A and scenario D, the UE will provide its latest 5G-GUTI so there may be no issue. For scenario B and scenario C, however, the UE may not provide 5G-GUTI because type of the home network and hosting network is different. According to current behaviour, when a UE registers to a PLMN, the UE may only include 5G-GUTI assigned by any PLMN. Similarly, when a UE registers to a SNPN, the UE may only include 5G-GUTI assigned by any SNPN. If a UE provides 5G-GUTI regardless of whether the 5G-GUTI is received from PLMN or SNPN, the hosting network may know the UE's home network.

Option 2: UE may provide latest valid 5G-GUTI to the AMF during the registration to hosting network.

For Option 1, there may be impact to the NAS Registration message. But for Option 2, there may be no NAS message impact. So we proposes to use Option 2.

The device may send valid 5G-GUTI information in the 5GS mobile identity IE or in an additional GUTI IE.

Option 3: If the device sends a SUCI by sending a registration request, the AMF may verify that the device's SUCI contains home network information. For example, if the device is authenticated using a Credentials Holder (CH) architecture, the SUCI sent by the device may contain the device's home network information. However, if the device uses a temporary credential to access the hosting network, the device may generate a SUCI based on the temporary credential and provide it to the hosting network. This may not contain the device's home network information. In this case, the AMF may send a conventional Identity Request to the device to request the device's SUCI information. The device may then send the SUCI information of its home network to the AMF. Based on this, the AMF may determine the device's home network information. Alternatively, if the device sends a temporary credential, the device may include the SUCI information of the home network in an additional GUTI IE and send it to the AMF. The AMF may use the home network identifier information in the SUCI to determine the home network of the device.

The hosting network AMF may determine the home network of the UE.

The following drawings are intended to illustrate specific embodiments of the present disclosure. The designations of specific devices or the designations of specific signals/messages/fields shown in the drawings are for illustrative purposes only, and the technical features of the present disclosure are not limited to the specific designations used in the drawings.

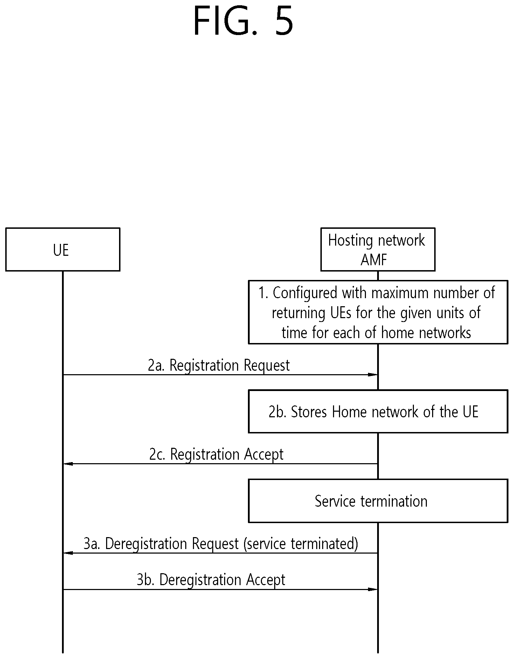

**FIG. 5** **illustrates a procedure according to an embodiment of the present specification.**

Multiple UEs may be sequentially deregistered by the hosting network.

This method may be about support for returning to the home network. If a large number of UEs return to the home network as soon as the localized service is terminated, congestion in the home network may be unavoidable. This method proposes to control the number of returning UEs based on a service level agreement between the home network and the hosting network.

This method may assume the following:
- There is service level agreement between the home network and hosting network.
- The hosting network configures the AMF with maximum number of returning UEs for the given units of time for each of home network, e.g. 10 UEs per second for PLMN A. That is, the AMF may deregister UEs in a distributed manner.

The home network operator may determine the maximum number of returning UEs. Considering the network processing capacity, it may notify the hosting network through a service level agreement.

That is, the AMF may be configured with the maximum number of UEs returning for all networks (PLMN and/or NPN) that have a service agreement with the hosting network. If the terminal is roaming, it is assumed that there is a service agreement between the serving network and the hosting network.
- The AMF of the hosting network may know the end time of the localized service.

When the localized service is terminated, the AMF of the hosting network may trigger a deregistration procedure.

The AMF may check the maximum number of UEs returning for each network. When the AMF deregisters a UE, the UE may return to the home network. There may be multiple home networks for UEs receiving local services. The home network may have a maximum number of UEs returning per unit time. That is, if more than the maximum number of UEs return to the home network per unit time, an overload may occur. The maximum number of UEs returning for each home network (e.g., 10 per second) may be configured in the AMF. Therefore, AMF may deregister UEs receiving local service by considering the maximum number of returning UEs for multiple home networks.

The AMF may sequentially trigger deregistration for selected UEs. The AMF may ensure that the number of UEs returning to each home network does not exceed a configured maximum number during a given time unit.

If multiple UEs trigger deregistration without waiting for network-initiated deregistration, the AMF may not be able to control the number of returning UEs. In order for the AMF to have time to sequentially trigger deregistration, the service termination time provided to the UEs may be later than the actual service termination time. The time interval may be determined by considering the expected number of returning UEs and the maximum number of returning UEs for a given time unit for the home network.

The method by which the AMF enforces the maximum number of returning UEs may vary depending on the implementation.
1. Information about the maximum number of returning UEs during a given time unit for each home network may be configured in the AMF.
2. The UE may register with the hosting network for localized services. The AMF may store information about the home network of the UE.

The UE may enable a mode for hosting network selection (e.g., SNPN access mode, localized service access mode, etc.) for hosting network selection. This allows the UE to find and register in a hosting network other than the home network.

When the UE registers in the hosting network, the UE may include a valid 5G-GUTI (and optionally an NID if assigned to the SNPN) in the registration request, regardless of whether the 5G-GUTI was received from the PLMN or the SNPN. Based on the received 5G-GUTI (and optionally an NID), the AMF may know the UE's home network.

The UE may provide information about its previous serving network to the hosting network AMF during the registration process to inform it of its previous serving network. The UE may provide explicit information about its previous serving network to the hosting network AMF. Alternatively, the hosting network AMF may infer the previous serving network based on the GUTI information of the previous serving network provided by the UE. The hosting network AMF may store information about the previous serving network of the terminal in the context of the terminal, and this information may be transferred to the UE context during the AMF change process.

The aforementioned context transmission may be for supporting roaming. Because, when the terminal roams, the HPLMN and the network to which the terminal will return are different. If the AMF does not have information about the serving network, the AMF may determine that the terminal is returning to the HPLMN. If the terminal is a terminal subscribed to the SNPN, the HPLMN may be interpreted as the Home SNPN.

In another way, the information on the maximum number of UEs returning per given unit time may be not pre-configured in the AMF, and the corresponding value may be stored in the subscriber information of the UDM, and the AMF may obtain the information (the maximum number of UEs returning per given unit time) by retrieving the subscriber information during the registration process of the terminal. If the pre-configuration method and the method based on the UDM subscriber information are used together, the AMF may give priority to the information in the UDM and use the pre-configuration value if there is no information in the UDM.

If the terminal moves to the hosting network while roaming, the terminal may provide the AMF with a value received from the serving network, not the home network, as a valid 5G-GUTI. In this case, the AMF may perform deregistration based on the configuration information for the serving network. The terminal may additionally transmit information about the home network while transmitting the 5G-GUTI to the AMF. In addition, even if the terminal does not provide home network information, the AMF may distinguish the home network of the terminal based on the subscriber information. And the deregistration may be performed based on the smaller value by comparing the maximum number of returning UEs of the home network and the maximum number of returning UEs of the previous serving network of the terminal.

In addition, when temporary credential is used when accessing the hosting network, the terminal may transmit (via 5GS mobile identity IE) the SUCI generated based on the temporary credentials to the AMF. In addition, the terminal may generate the valid 5G-GUTI information or the SUCI based on the home network that the terminal has in the additional GUTI IE and transmit it to the AMF. Based on the information in the additional GUTI IE transmitted by the terminal, the AMF may know the home network of the terminal (the previous serving network in case of roaming).

3. After the localized service is terminated, the AMF may trigger the deregistration in order so that the number of returning UEs does not exceed the configured maximum number of returning UEs.

When a number of UEs receive localized services from a hosting network, after the localized service is terminated, the hosting network AMF may check whether the number of the plurality of UEs exceeds the maximum number of returning UEs. If the number of the plurality of UEs exceeds the maximum number of returning UEs, the AMF may trigger deregistration in order so that the number of returning UEs does not exceed the set maximum number of returning UEs.

That is, when the AMF triggers deregistration of UEs after the termination of the localized service, the AMF may transmit deregistration requests to a certain ratio of terminals in an adaptive and distributed method. This method may limit the signaling burden of both the hosting network (source network) and the target network (home network).

The above-mentioned distributed method may mean a method in which the AMF divides a number of UEs into groups according to a certain ratio and sends deregistration requests to each group at different times. For example, the method is as follows.
i) The AMF may select a number of UEs that does not exceed the maximum number of returning UEs from among the plurality of UEs. The AMF may transmit deregistration requests to the selected UEs.
ii) After a certain period of time, the AMF may select a number of UEs (that does not exceed the maximum number of returning UEs) among the unselected UEs.

The above-described operations i) and ii) are performed in two parts, and the number of distributed groups is 2. However, depending on the number of UEs receiving localized services, the number of distributed groups may be 3, 4, or more.

The AMF may include information that the localized service has been terminated in the Deregistration Request message. The UE may return to the home network. The UE may not re-register with the hosting network based on the instruction received from the AMF.

When the terminal receives information from the AMF that the localized service has been terminated, the terminal may not re-register with the hosting network. To this end, the terminal may turn off the mode for hosting network selection (e.g., SNPN access mode, localized service access mode, etc.) based on the information that the localized service has been terminated and perform network selection again. The terminal may return to the home network through this.

The AMF may also consider the deregistration UE initiated by the UE when the AMF enforces the maximum number of returning UEs. For example, when a UE transmits a deregistration request to the AMF, the AMF may consider the UE that requested the deregistration when selecting the UEs to be deregistered considering the maximum number of returning UEs.

When the AMF notifies the terminal that the localized service has been terminated through the Deregistration Request message, the terminal may complete the deregistration procedure and return to the home network.

The maximum number of returning UEs during a given time unit for each home network may be set in the AMF. The AMF may trigger the deregistration in a sequential manner so that the number of returning UEs does not exceed the configured maximum number.

The AMF may indicate that the localized service has been terminated in the Deregistration Request message sent to the terminal.

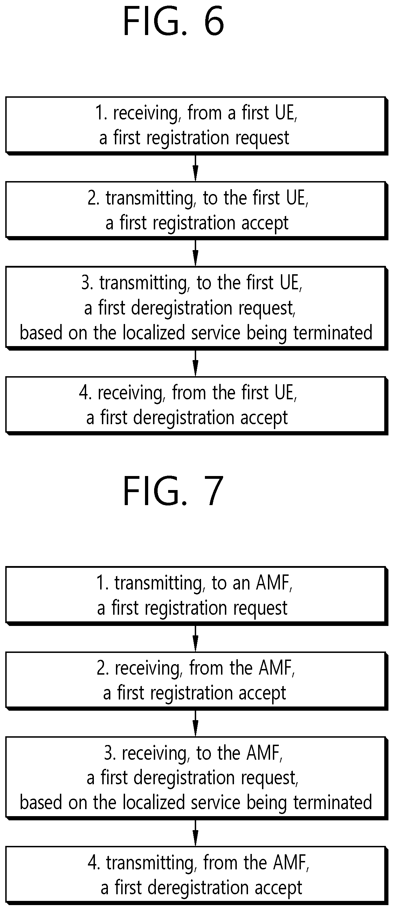

**FIG. 6** **shows the procedure of the AMF according to the disclosure of the present specification.**

A hosting network that hosts localized service may comprise the AMF.
1. The AMF may receive, from a first UE (User Equipment), a first registration request.
2. The AMF may transmit, to the first UE, a first registration accept.
3. The AMF may transmit, to the first UE, a first deregistration request, based on the localized service being terminated.
   The first deregistration request may include information that the localized service is terminated.
4. The AMF may receive, from the first UE, a first deregistration accept.

The AMF may receive, from the first UE, ID (identity) of a home network for the first UE.

The home network may be a network serving the first UE prior to the hosting network.

The AMF may receive, from a second UE, a second registration request.

The AMF may transmit, to the second UE, a second registration accept.

A home network for the first UE may be a home network for the second UE.

The AMF may transmit, to the second UE, a second deregistration request, based on the localized service being terminated.

The second deregistration request may include information that the localized service is terminated.

The second deregistration request may be transmitted at a different time than the first deregistration request.

The AMF may receive, from the second UE, a second deregistration accept.

The different time than the first deregistration request may be time to prevent overloading of the home network.

**FIG. 7** **shows the procedure of the first UE according to the disclosure of the present specification.**
1. The first UE may transmit, to an AMF (Access and Mobility management Function), a first registration request.
   A hosting network that hosts localized service may comprise the AMF.
2. The first UE may receive, from the AMF, a first registration accept.
3. The first UE may receive, to the AMF, a first deregistration request, based on the localized service being terminated.

The first deregistration request may include information that the localized service is terminated.

The first UE may transmit, from the AMF, a first deregistration accept.

The first UE may transmit, from the AMF, ID (identity) of a home network for the first UE.

The home network may be a network serving the first UE prior to the hosting network.

A home network for the first UE may be a home network for the second UE.

The second deregistration request may be transmitted at a different time than the first deregistration request, based on the AMF transmitting a second deregistration request to the second UE.

The different time than the first deregistration request may be time to prevent overloading of the home network.

Hereinafter, an apparatus for performing communication according to some embodiments of the present specification will be described.

For example, the apparatus may include a processor, a transceiver, and a memory.

For example, the processor may be configured to be operably coupled with a memory and a processor.

The processor may perform: wherein a hosting network that hosts localized service comprises the AMF, receiving, from a first UE (User Equipment), a first registration request; transmitting, to the first UE, a first registration accept; transmitting, to the first UE, a first deregistration request, based on the localized service being terminated; wherein the first deregistration request includes information that the localized service is terminated, receiving, from the first UE, a first deregistration accept.

Hereinafter, a processor for providing communication according to some embodiments of the present specification will be described.

The processor is configured to: transmitting, to an AMF (Access and Mobility management Function), a first registration request; wherein a hosting network that hosts localized service comprises the AMF, receiving, from the AMF, a first registration accept; receiving, to the AMF, a first deregistration request, based on the localized service being terminated; wherein the first deregistration request includes information that the localized service is terminated, transmitting, from the AMF, a first deregistration accept.

Hereinafter, a non-volatile computer readable medium storing one or more instructions for providing multicast service in wireless communication according to some embodiments of the present specification will be described.

According to some embodiments of the present disclosure, the technical features of the present disclosure may be directly implemented as hardware, software executed by a processor, or a combination of the two. For example, in wireless communication, a method performed by a wireless device may be implemented in hardware, software, firmware, or any combination thereof. For example, the software may reside in RAM memory, flash memory, ROM memory, EPROM memory, EEPROM memory, registers, hard disk, removable disk, CD-ROM, or other storage medium.

Some examples of a storage medium are coupled to the processor such that the processor can read information from the storage medium. Alternatively, the storage medium may be integrated into the processor. The processor and storage medium may reside in the ASIC. For another example, a processor and a storage medium may reside as separate components.

Computer-readable media can include tangible and non-volatile computer-readable storage media.

For example, non-volatile computer-readable media may include random access memory (RAM), such as synchronization dynamic random access memory (SDRAM), read-only memory (ROM), or non-volatile random access memory (NVRAM). Read-only memory (EEPROM), flash memory, magnetic or optical data storage media, or other media that can be used to store instructions or data structures or Non-volatile computer readable media may also include combinations of the above.

Further, the methods described herein may be realized at least in part by computer-readable communication media that carry or carry code in the form of instructions or data structures and that can be accessed, read, and/or executed by a computer.

According to some embodiments of the present disclosure, a non-transitory computer-readable medium has one or more instructions stored thereon. The stored one or more instructions may be executed by a processor of the base station.

The stored one or more instructions cause the processors to: transmitting, to an AMF (Access and Mobility management Function), a first registration request; wherein a hosting network that hosts localized service comprises the AMF, receiving, from the AMF, a first registration accept; receiving, to the AMF, a first deregistration request, based on the localized service being terminated; wherein the first deregistration request includes information that the localized service is terminated, transmitting, from the AMF, a first deregistration accept.

The present specification may have various effects.

For example, after a local service is terminated, the terminal can be deregistered and the terminal can be notified that the local service has been terminated, thereby preventing the terminal from attempting to re-register with the network hosting the local service.

For example, after a local service is terminated, congestion caused by a large number of terminals in the home network can be prevented by preventing the terminal from returning to the home network from the hosting network all at once.

Effects that can be obtained through specific examples of the present specification are not limited to the effects listed above. For example, various technical effects that a person having ordinary skill in the related art can understand or derive from this specification may exist. Accordingly, the specific effects of the present specification are not limited to those explicitly described herein, and may include various effects that can be understood or derived from the technical characteristics of the present specification.

The claims described herein may be combined in various ways. For example, the technical features of the method claims of the present specification may be combined and implemented as an apparatus, and the technical features of the apparatus claims of the present specification may be combined and implemented as a method. In addition, the technical features of the method claim of the present specification and the technical features of the apparatus claim may be combined to be implemented as an apparatus, and the technical features of the method claim of the present specification and the technical features of the apparatus claim may be combined and implemented as a method. Other implementations are within the scope of the following claims.

## Claims

1. A method for performing communication, performed by an AMF (Access and Mobility management Function), comprising:
wherein a hosting network that hosts a localized service comprises the AMF,
receiving, from a first UE (User Equipment), a first registration request;
transmitting, to the first UE, a first registration accept;
transmitting, to the first UE, a first deregistration request, based on the localized service being terminated;
wherein the first deregistration request includes information that the localized service is terminated,
receiving, from the first UE, a first deregistration accept.

2. The method of claim 1, further comprising:
receiving, from the first UE, ID (identity) of a home network for the first UE,
wherein the home network is a network serving the first UE prior to the hosting network.

3. The method of claim 1 or claim 2, further comprising:
receiving, from a second UE, a second registration request;
transmitting, to the second UE, a second registration accept;
wherein a home network for the first UE is a home network for the second UE,
transmitting, to the second UE, a second deregistration request, based on the localized service being terminated;
wherein the second deregistration request includes information that the localized service is terminated,
wherein the second deregistration request is transmitted at a different time than the first deregistration request;
receiving, from the second UE, a second deregistration accept.

4. The method of claim 3,
wherein the different time than the first deregistration request is time to prevent overloading of the home network.

5. An AMF (Access and Mobility management Function) to perform communication, comprising:
a transceiver; and
a processor,
wherein the processor performs operation comprising a method according to any one among claims 1 to 4.

6. The AMF of claim 5, wherein the operation comprises:
receiving, from the first UE, ID (identity) of a home network for the first UE,
wherein the home network is a network serving the first UE prior to the hosting network.

7. The AMF of claim 5 or claim 6, further comprising:
receiving, from a second UE, a second registration request;
transmitting, to the second UE, a second registration accept;
wherein a home network for the first UE is a home network for the second UE,
transmitting, to the second UE, a second deregistration request, based on the localized service being terminated;
wherein the second deregistration request includes information that the localized service is terminated,
wherein the second deregistration request is transmitted at a different time than the first deregistration request;
receiving, from the second UE, a second deregistration accept.

8. The AMF of claim 7,
wherein the different time than the first deregistration request is time to prevent overloading of the home network.

9. A method for performing communication, performed by a first UE (User Equipment), comprising:
transmitting, to an AMF (Access and Mobility management Function), a first registration request;
wherein a hosting network that hosts a localized service comprises the AMF,
receiving, from the AMF, a first registration accept;
receiving, to the AMF, a first deregistration request, based on the localized service being terminated;
wherein the first deregistration request includes information that the localized service is terminated,
transmitting, from the AMF, a first deregistration accept.

10. The method of claim 9, further comprising:
transmitting, from the AMF, ID (identity) of a home network for the first UE,
wherein the home network is a network serving the first UE prior to the hosting network.

11. The method of claim 9 or claim 10,
wherein a home network for the first UE is a home network for the second UE,
wherein the second deregistration request is transmitted at a different time than the first deregistration request, based on the AMF transmitting a second deregistration request to the second UE,

12. The method of claim 11,
wherein the different time than the first deregistration request is time to prevent overloading of the home network.

13. A first UE (User Equipment) to perform communication, comprising:
a transceiver; and
a processor,
wherein the processor performs operation comprising method according to any one among claims 9 to 12.

14. A first apparatus in mobile communication, comprising:
at least one processor; and
at least one memory storing instructions and operably electrically connectable with the at least one processor to perform operation comprising a method according to any one among claims 9 to 12.

15. A non-volatile computer readable storage medium having recorded instructions,
wherein the instructions, based on being executed by one or more processors, cause the one or more processors to perform operation comprising a method according to any one among claims 9 to 12.
